# EUROPEAN PATENT APPLICATION

(11) **EP 3 372 427 A1**
(43) Date of publication of application: **12.09.2018**
(21) Application number: 17159621.6
(22) Date of filing: 07.03.2017
(51) Int. Cl.: B60G 9/02, B60G 17/005, B60G 11/27, B60P 1/04

(54) **A WORKING MACHINE**

(71) Applicant: Volvo Construction Equipment AB, 631 85 Eskilstuna (SE)
(72) Inventor: SOLENLID, Lena, 352 49 Växjö (SE); JOHANSSON, Peter, 352 64 Växjö (SE)
(74) Representative: Volvo Technology Corporation

(57) **Abstract**

The invention relates to a working machine (1, 101, 201) having a first side (3, 203) and a second side (2, 201) arranged opposite to the first side. The working machine comprising a dump body (30, 130, 230) and a working machine frame (20, 120, 220), and at least one tilting actuator (41, 241). The tilting actuator may arrange the working machine in a load dumping state. The working machine further comprises a first propulsion axle (10, 110, 210) arranged in the first side, and a second propulsion axle (10, 210') arranged in the second side, and a first propulsion axle suspension arrangement (50, 150, 250) arranged between the first propulsion axle and the working machine frame; and a second propulsion axle suspension arrangement (250') arranged between the second propulsion axle and the working machine frame. In the load dumping state the second propulsion axle suspension arrangement is stiff.

## Description

### TECHNICAL FIELD

The invention relates to a working machine having a first side and a second side arranged opposite to said first side, said second side being a load dumping side.

### BACKGROUND

In the field of construction equipment there are a number of different working machines used to move, haul or dig material such as soil, gravel, rocks etcetera.

In connection with transportation of heavy loads, e.g. in contracting work, dump vehicles of the type of articulated haulers (also called frame-steered vehicles or dumpers) are frequently used. Such vehicles may be operated with large and heavy loads in areas where there are no roads, for example for transports in connection with road or tunnel building, sand pits, mines and similar environments.

A dump vehicle comprises a forward vehicle section (a so-called engine unit) which in turn comprises a forward frame, an engine, a cab, and a forward propulsion axle supported by the frame. The dump vehicle further comprises a rear vehicle section (a so-called load-carrying unit) which in turn comprises a rear frame, a tiltably arranged container for carrying loads, and one or two rear propulsion axles supported by the frame.

The frame of the engine unit is connected to the frame of the load-carrying unit by means of a special articulation joint allowing the engine unit and the load-carrying unit to pivot in relation to each other about an imaginary axis extending in the longitudinal direction of the vehicle. Thanks to the articulation joint, the engine unit and the load-carrying unit are allowed to move substantially independently of each other.

In order for the dump vehicle to absorb irregularities in the road or terrain it is traveling on, the dump vehicle is typically equipped with a suspension arrangement. The suspension is typically chosen by compromising between comfort and control.

Too stiff suspension decrease comfort and too soft suspension decrease control of the vehicle.

### SUMMARY

In view of the above-mentioned and other drawbacks of the prior art, the object of the present inventive concept is to provide a working machine a first side and a second side arranged opposite to said first side, said second side being a load dumping side, which at least alleviates above mentioned problems.

The invention is based on the inventors' realization that when the dump vehicle is tilted to discharge a load, the suspension arrangement may make the working machine hard to control, and thus making discharging of the load hard. The inventors have realized that by making a suspension which is substantially stiff during discharge, an increased control may be achieved when the comfort is not an issue.

According to a first aspect of the invention, the object is achieved by a working machine according to claim 1. More specifically, the invention relates to a working machine having a first side and a second side arranged opposite to said first side, said second side being a load dumping side, said working machine comprising:
a dump body for receiving a load,
a working machine frame for supporting said dump body,
at least one tilting actuator connecting said working machine frame and said dump body such that, in a load dumping state, said dump body is tiltable by means of said at least one tilting actuator in order to discharge the load from the dump body,
a first propulsion axle arranged in said first side of the working machine, and a second propulsion axle arranged in said second side of the working machine;
a first propulsion axle suspension arrangement arranged between said first propulsion axle and said working machine frame; and a second propulsion axle suspension arrangement arranged between said second propulsion axle and said working machine frame,
wherein in said load dumping state said second propulsion axle suspension arrangement is bottoming out and thereby stiff.

By the provision of a working machine where the working machine frame is suspended by a first propulsion axle suspension arrangement, and a second propulsion axle suspension arrangement, and wherein in said load dumping state said second propulsion axle suspension arrangement is stiff, the working machine frame may be sufficiently suspended, while still allowing for a stiff connection on the load dumping side when discharging the load. Thus, as the dump body is tilted, in the load dumping state, by means of the at least one tilting actuator, the second propulsion axle suspension arrangement provides a stiff connection between the working machine frame and the second propulsion axle, in order to increase the control of the working machine and safely discharge the load from the dump body. Thus, it should be understood that the working machine frame is sufficiently suspended, e.g. during driving, while the working machine still provide a stiff connection when off-loading or discharging the load from the dump body.

It should be understood that by the term "bottoming out", the suspension ability of the second propulsion axle suspension arrangement ceases. In other words, the second propulsion axle suspension arrangement is compressed to its maximum, or to its extreme limit. Hereby, the second propulsion axle suspension arrangement becomes "stiff" or provide a "stiff connection".

According to one embodiment, said second propulsion axle suspension arrangement is configured to actively suspend the second propulsion axle during e.g. low-loading and driving, and configured to provide a stiff connection between the working machine frame and the second propulsion axle in e.g. the load dumping state or heavy-loading of the working machine. In other words, said second propulsion axle suspension arrangement is arrangeable in at least two different states, a first state in which said second propulsion axle suspension arrangement actively suspend the second propulsion axle relative the working machine frame, an in a second state in which said second propulsion axle suspension arrangement does not suspend the second propulsion axle relative the working machine frame (i.e. provide a "stiff" connection).

According to one embodiment, the second propulsion axle suspension arrangement is configured to passively change from its first state to its second state. With passively change is here meant that no control signal or the like is sent to the second propulsion axle suspension arrangement in order to make it stiff.

It should be understood that the working machine frame is a common frame for the first and second propulsion axles. Thus, the working machine frame may be referred to as a common working machine frame. According to one embodiment, the working machine comprises only one working machine frame. According to one embodiment, the different portions of the working machine frame is rigidly connected to each other. In other words, the working machine frame is not divided by an articulated joint.

According to one embodiment, said second propulsion axle suspension arrangement has a second propulsion axle damping characteristics, wherein in said load dumping state said second propulsion axle damping characteristics is adapted to make the second propulsion axle suspension arrangement stiff.

According to one embodiment, said second propulsion axle damping characteristics is defined by the ability of the second propulsion axle suspension arrangement to suspensionally take up a load from said second propulsion axle and/or said working machine frame, and wherein in said load dumping state, said second propulsion axle damping characteristics is zero or close to zero.

In other words, a damping characteristic of a propulsion axle suspension arrangement is defined as its ability to suspend, e.g. measured as stroke length of the suspension arrangement vs applied load or applied force. Thus, when the damping characteristics is zero, the propulsion axle suspension arrangement is not providing any suspension, but the connection/suspension is "stiff" (i.e. there will be no change in stroke regardless if the applied load or force is increased).

According to one embodiment said first propulsion axle suspension arrangement has a first propulsion axle damping characteristics which is different from said second propulsion axle damping characteristics. In other words, the suspension ability, or the damping abiity, is different between said first and second propulsion axle suspension arrangements. Hereby, the suspension of the propulsion axles of the working machine can be adapted after will, for example in such a way that during driving with no load, both the first and the second propulsion axle suspension arrangement contribute to the total suspension of the working machine, while when the working machine is loaded and/or in the load dumping state, the suspension of the working machine, at least at the load dumping side, is made stiff for enhanced stability during discharging.

According to one embodiment, said first propulsion axle suspension arrangement has a larger suspension ability compared to said second propulsion axle suspension arrangement. Stated differently, said first propulsion axle suspension arrangement has a larger suspension stroke compared to said second propulsion axle suspension arrangement. Thus, the first propulsion axle suspension arrangement may contribute more to the suspension of the working machine compared to the second propulsion axle suspension arrangement. Hereby, the second propulsion axle suspension arrangement can be constructed with a larger focus on the stiff connection between the second propulsion axle relative the working machine frame in the load dumping state.

According to one embodiment, said dump body comprises a first end portion and a second end portion arranged on the opposite side to said first end portion, said second end portion being a load dumping end portion which is pivotally arranged to said working machine frame, wherein said tilting actuator is connected to said dump body in such a way that in said load dumping state, said first end portion of the dump body is lifted. Hereby, a convenient and efficient way of bringing the working machine into the load dumping state is provided.

According to one embodiment said second propulsion axle suspension arrangement comprises at least one projection arm extending from said second propulsion axle towards said working machine frame, and a suspension cushion arranged between said projection arm and said working machine frame, wherein said suspension cushion is configured to suspensionally take up a threshold load. Stated differently, said suspension cushion is configured to suspensionally take up a load from e.g. the dump body, up to a threshold load.

According to one embodiment, the projection arm and suspension cushion of said second propulsion axle suspension arrangement is referred to as rubbersprings and shock absorbers.

According to one embodiment said projection arm is made of a rigid material, such as e.g. metal such as steel, while said suspension cushion is made of rubber or some other elastic material. Said suspension cushion may e.g. be an air bellow.

Thus, the second propulsion axle suspension arrangement may function as follows: During low-load activities, such as e.g. during driving or low loading, the second propulsion axle suspension arrangement is actively suspending the second propulsion axle relative the working machine frame. If the load on the second propulsion axle suspension arrangement increase, as e.g. during heavy loading or in the load dumping state in which the weight of the dump body and any load held therein is concentrated to the second side of the working machine, the second propulsion axle suspension arrangement will cease to actively suspend the second propulsion axle relative the working machine frame, as the suspension cushion has been compressed to its maximum (i.e. the applied load is larger than the threshold load). Thus, the load from the working machine frame will be taken up by the projection arm.

In other words, and according to one embodiment, in said load dumping state, said suspension cushion is configured in such a way that a load from said working machine frame to said second propulsion axle suspension arrangement exceeds the threshold load, whereby said load from said working machine frame is taken up mainly by said at least one projection arm.

According to one embodiment, said at least one projection arm is a first projection arm, and said suspension cushion is a first suspension cushion, where said second propulsion axle suspension arrangement further comprises a second projection arm extending from said working machine frame towards said second propulsion axle, and a second suspension cushion arranged between said second projection arm and said second propulsion axle, wherein said first and second projection arms are arranged opposite each other such that said first suspension cushion is configured to be brought into contact with said second suspension cushion.

According to one embodiment, said first and second projection arms together with said respective first and second suspension cushions, are referred to as a first pair of suspension arms, wherein said second propulsion axle suspension arrangement comprises at least a second pair of suspension arms correspondingly constructed to said first pair of suspension arms. Said first and second pair of suspension arms may e.g. be arranged on opposite sides of a center of the second propulsion axle.

According to one embodiment, said first propulsion axle has an elongated main body comprising a first end portion, a second end portion and a center portion arranged between said first and second end portions, each one of said first and said second end portions being adapted to be equipped with a propulsion hub for driving a working machine propulsion means, said elongated main body having a main body length extending from said first end portion to said second end portion, and
wherein said first propulsion axle suspension arrangement comprises a first suspension device and a second suspension device arranged on opposite sides of the center of the elongated main body,
and wherien said first and second suspension devices are arranged in the center portion of the elongated main body.

By arranging said first and second suspension devices in the center portion of the elongated main body, a relatively large pivoting movement of propulsion axle can be achieved. Thus, the first propulsion axle suspension arrangement can contribute to a larger extent to the total suspension of the working machine. Thus, the working machine may absorb road irregularities in an improved manner.

According to one embodiment, each one of said first and second suspension devices hold a suspension fluid. The suspension fluid may e.g. be air or compressed gas, or alternatively hydraulic oil. According to one embodiment each one of, or only one of, the first and second suspension devices may be equipped with a level-regulating valve. Hereby, the total amount of suspension fluid in the propulsion axle suspension arrangement can be varied, and the level of the working machine frame and/or the distance between the first propulsion axle and the ground can be adjusted accordingly. In embodiments where the first propulsion axle arrangement is at least partly pneumatically driven, the level-regulating valve may be connected to a main pressure line and can be shut off with respect thereto. The main pressure line can be connected via a main pressure valve alternately to a compressed air source and to a compressed air sink.

It should be understood that the main body length is, according to one embodiment, the total length of the elongated main body. That is, the main body length may be described as extending from a first end of the elongated main body, said first end being comprised in said first end portion, to a second, opposite end of the elongated main body, said second end being comprised in said second end portion.

According to one embodiment, said length of the elongated main body is the same as the length, or total length, of the first propulsion axle. Thus, the first propulsion axle may be divided into corresponding first and second end portions as well as a corresponding center portion. In other words, the first and second suspension devices may be described as being arranged in the center portion of the first propulsion axle.

It should be understood that the elongated main body may for e.g. for production process reasons, be divided into several sub-portions, where the sub-portion is connected to each other so as to form an elongated main body. In other words, the elongated main body need not to, but may, be made in one piece.

According to one embodiment, the center of a component is the respective geometric center. Thus, it should be understood that the center of the elongated main body may refer to the geometric center of the elongated main body, i.e. a center within the elongated main body positioned in the center portion. Correspondingly, a center of the first propulsion axle may be understood as the geometric center of the first propulsion axle, which in at least some embodiments coincides with the center of the elongated main body.

According to one embodiment, said center portion is centrally arranged on said elongated main body, and is delimited to be at most 50 % of the main body length.

It should be understood that the term "delimited to be at most 50 % of the main body length" means that the extension of the center portion, in the same direction as the main direction of the elongated main body, makes up at most 50 % of the total length of the elongated main body.

According to one embodiment, the center portion is delimited to be at most 45 %, or at most 40 %, or at most 35 %, or at most 30 %, or at most 25 %, or at most 20 % or at most 15 %, or at most 10 % of the main body length.

According to one embodiment, the center portion is centrally arranged about a center, or geometric center, of the elongated main body. According to one embodiment, the center portion is symmetrically arranged about the center, such as the geometric center, of the elongated main body.

According to one embodiment, said first suspension device is arranged closer to the center of the elongated main body than to the first end portion (or first end of the elongated main body), and said second suspension device is arranged closer to the center of the elongated main body than to the second end portion (or second end of the elongated main body).

According to one embodiment the roll center, or roll axis, of the first propulsion axle is centrally positioned between said first and said second suspension devices. Thus, as the first and second suspension devices are arranged between the first propulsion axle and the working machine frame, the roll center, or roll axis, will be positioned above the first propulsion axle. Hereby, the pivoting movement of the first propulsion axle will pivot about a point or axis positioned above the first propulsion axle and the elongated main body.

According to one embodiment, said elongated main body of the first propulsion axle has an extension in the vertical direction, and is delimitated by at least a top surface of the elongated main body. Thus, in such embodiments, the roll axis of the first propulsion axle is positioned vertically above the top surface of the elongated main body. Described differently, the top surface of said elongated main body extends in a top surface plane, such as e.g. in a horizontal plane, and the roll axis of the first propulsion axle is positioned in a plane, such as in a horizontal plane, above said top surface plane.

According to one embodiment, the working machine further comprises a first linkarm arrangement pivotably connecting said first propulsion axle with said working machine frame such that the roll axis of the first propulsion axle relative the working machine frame is comprised in said first linkarm arrangement,
a second linkarm arrangement pivotably connecting said second propulsion axle with said working machine frame such that the roll axis of the second propulsion axle relative the working machine frame is comprised in said second linkarm arrangement,
wherein at least the respective portion of the first and second linkarm arrangement comprising the respective roll axis is positioned above the respective center portion of said first and second propulsion axle.

Hereby the first and second propulsion axle can pivot to a larger degree without the working machine risking to rollover. Hereby, larger irregularities in the ground can more easily be overcome and run over by the working machine.

According to one embodiment at least one of said first and second linkarm arrangements comprises two linkarms, and a propulsion axle connection hub, each one of said two linkarms having a respective propulsion axle end portion connected to the propulsion axle connection hub, and a respective frame end portion connected to said working machine frame. The two linkarms may preferably form a V-shaped link. Hereby, the linkarm arrangement prevents the first and/or second propulsion axle to be pivoted in an undesired direction.

In one embodiment the V-shaped link is formed by the link arms are co-axially or closely arranged onto the connection hub at their propulsion axle end portion, and transversally distanced at their frame end portion.

According to one embodiment, the roll axis of the first propulsion axle relative the working machine frame is comprised in the propulsion axle connection hub of said first linkarm arrangement, and/or the roll axis of the second propulsion axle relative the working machine frame is comprised in the propulsion axle connection hub said second linkarm arrangement. Even more specifically, in one embodiment, the roll axis of the first propulsion axle is positioned in the same horizontal plane as the propulsion axle end portions of the two linkarms of the first linkarm arrangement, and/or the roll axis of the second propulsion axle is positioned in the same horizontal plane as the propulsion axle end portions of the two linkarms of the second linkarm arrangement.

According to one embodiment, correspondingly to said first propulsion axle, said second propulsion axle has an elongated main body comprising a first end portion, a second end portion and a center portion arranged between said first and second end portions, each one of said first and said second end portions being adapted to be equipped with a propulsion hub for driving a working machine propulsion means, said elongated main body having a main body length extending from said first end portion to said second end portion.

For example, the respective propulsion axle connection hub of the respective linkarm arrangement may be a projection extending from the center portion of the respective elongated main body towards the working machine frame, e.g. in the vertical direction. The two link arms may be connected to said connection hub in order to connect the propulsion axle to the working machine frame.

It should be understood that the respective center portion of the elongated main body may have a different size and shape than the first and second end portions. For example, the center portion, or at least a portion of the center portion, may have a larger extension in the vertical direction compared to the first and second end portions. Thus, the center portion, or at least a portion of the center portion, may be formed as a bulb or ramp on the elongated main body. In such embodiments, the propulsion axle connection hub may be formed as a projection extending upwards from this bulb or ramp. Thus, the connection to the two linkarms may be made at an even higher position compared to an elongated main body not having such bulb or ramp and/or the propulsion axle connection hub may be made shorter.

According to one embodiment, the working machine comprises a respective rolling bearing comprised in the connection between the respective propulsion axle connection hub and the two linkarms.

According to one embodiment, a ratio of a first parameter A defined as the shortest distance between the center of the elongated main body of the first propulsion axle and the roll axis of the first propulsion axle, and a second parameter B defined as the shortest distance between the center of the elongated main body of the first propulsion axle and the ground is between 0.35 and 1.0, preferably between 0.55 and 0.75, and more preferably between 0.65 and 0.75. According to one embodiment a ratio of a third parameter C defined as the shortest distance between the center of the elongated main body of the second propulsion axle and the roll axis of the second propulsion axle, and a fourth parameter D defined as the shortest distance between the center of the elongated main body of the second propulsion axle and the ground is between 0.35 and 1.0, preferably between 0.55 and 0.75, and more preferably between 0.65 and 0.75.

As the respective roll axis is comprised in said respective linkarm arrangement, the first parameter A and the third parameter C may also be defined as the shortest distance between the center of the respective elongated main body and the respective linkarm arrangement.

According to one embodiment, the shortest distance between the center of the first propulsion axle and the roll axis of the first propulsion axle is between 200 mm and 500 mm, preferably between 300 mm and 400 mm, and wherein the shortest distance between the center of the second propulsion axle and the roll axis of the second propulsion axle is between 200 mm and 500 mm, preferably between 300 mm and 400 mm.

Correspondingly, as the respective roll axis is comprised in said respective linkarm arrangement, the shortest distance between the center of the respective elongated main body and the respective roll axis of the respective propulsion axle, may be determined as the shortest distance between the center of the respective elongated main body and the respective linkarm arrangement.

According to one embodiment, the working machine further comprises said first and second propulsion hubs for driving a working machine propulsion means, and wherein the roll axis for said first propulsion axle coincides with the roll axis for said second propulsion axle, and wherein the coinciding roll axis is positioned horizontally above the respective upper ends of the first and second propulsion hubs.

Stated differently, a first horizontal plane may be defined as extending through the upper ends of the first and second propulsion hubs, and the roll axis of the first and second propulsion axle are thus positioned above said first horizontal plane.

According to one embodiment, said working machine comprises a propulsion means linkarm connecting the propulsion means of said first and/or second propulsion axle directly to the working machine frame. Hereby, the first and/or second propulsion axle is prevented from pivoting in the longitudinal direction (e.g. prevented from pivoting forwards and backwards).

According to one embodiment the working machine, and its components, can be described as having a height, a width and a length. The width of the working machine extends in the same direction as the main direction of the elongated main body of the respective propulsion axle, which may be referred to as a transversal direction, the length of the working machine extends along the longitudinal direction of the working machine, the longitudinal direction being perpendicular to the transversal direction of the working machine, and the height of the working machine extends in a direction being perpendicular to both the longitudinal and transversal directions. Thus, the roll axis of the propulsion axle, or for embodiments where two propulsion axles are described the roll axis of the first propulsion axle and the second propulsion axle, extends in the longitudinal direction.

According to one embodiment the extension of the working machine may be defined in a x, y, z coordinate system, where the x-direction extends in the longitudinal direction and thus along the length of the working machine, the y-direction extends in the transversal direction, and thus along the width of the working machine, and the z-direction extends in a direction being perpendicular to both the x and y-directions, and thus along the height of the working machine. When described in the x, y, z coordinate system, the roll axis of the propulsion axle is positioned higher, i.e. the z-value is higher, compared to the center portion (or geometrical center) of the of the elongated main body of said propulsion axle. For embodiments where two propulsion axles are described, the roll axis of the first propulsion axle and the second propulsion axle, are positioned higher, i.e. the z-value is higher, compared to the respective center portion (or geometrical center) of the of the elongated main body of the first and the second propulsion axle, respectively.

Also described in the x, y, z coordinate system, the respective linkarm arrangement is positioned in an x, y plane above (i.e. higher or having a higher z-value) said center portion (or geometric center) of the elongated main body of the respective propulsion axis.

Optionally, the working machine is a self-propelled working machine.

Optionally, the working machine is a driverless working machine.

Optionally, the working machine comprises propulsion means, such as wheels or crawlers, for propelling the working machine.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a perspective view of a working machine according to one embodiment of the invention.
Fig. 2 is a side view of a working machine according to one embodiment of the invention.
Fig. 3 is a front view of a working machine according to one embodiment of the invention.
Fig. 4 is a perspective view of a portion of the working machine including a propulsion axle according to one embodiment of the invention.
Fig. 5 is a side view showing the first and second propulsion axle suspension arrangements of a working machine according to one embodiment of the invention.
Fig. 6 is a side view of the working machine of Fig. 5 but in a load dumping sate, according to one embodiment of the invention.

### DETAILED DESCRIPTION OF EXAMPLE EMBODIMENTS OF THE INVENTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout.

In the following, a working machine 1 is described. The inventive concept is applicable on any working machines within the fields of industrial construction machines or construction equipment, in particular dumpers/haulers. Although the invention will be described with respect to a hauler, the invention is not restricted to this particular machine, but may also be used in other working machines such as articulated haulers, excavators, backhoe loaders and wheel loaders.

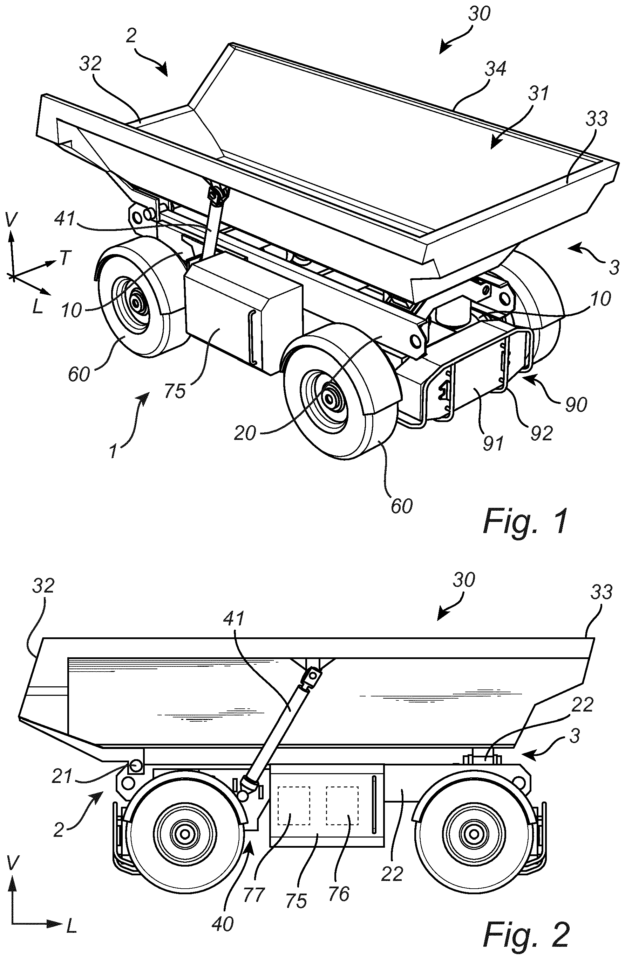

As seen in fig. 1 the working machine comprises a dump body 30 for accommodating a load. Merely as an example, and as is indicated in Fig. 1, the dump body 30 may be a loading platform of the working machine 1. The working machine 1 is adapted to have a load receiving condition in which the dump body 30 comprises an open load receiving area 31 outwardly delimited by a load receiving area circumference 34. In fig. 1 an embodiment is shown where the working machine 1 is adapted to assume the load receiving condition in a normal state. In other words, the working machine 1 embodiment illustrated in Fig. 1 comprises a dump body 30 which always comprises an open load receiving area 31 outwardly delimited by a load receiving area circumference 34. However, it is also envisioned that embodiments of the working machine may comprise cover means (not shown), such as a lid, that is adapted to cover at least a portion of the dump body 30 and which cover means can be moved in order to obtain the open load receiving area 31 to thereby arrive at the open load receiving area 14. Generally, the open load receiving area 31 may be an area that is directly accessible from the environment surrounding the working machine 1. For instance, the open load receiving area 31 may be an area that is directly accessible from the above of the dump body 30.

The working machine does not have a driver seat, but is intended to be autonomously and/or remotely driven. The machine further comprises a first side 3 and a second side 2 arranged opposite to the first side 3, the second side 2 being a load dumping side 2. The first side 3 may also be referred to as an opposite side 3. The opposite side 3 may be used as a front end side when the machine is driven in the direction that puts the opposite side 3 first. However, the working machine 1 may be drivable in any direction, i.e. it is bidirectional. Further, the dump body 30 comprise a load dumping end portion 32 arranged on the working machines load dumping side 2, and an opposite end portion 33 arranged on the working machines opposite side 3.

Further, still refereeing to fig. 1 the working machine 1 comprise a working machine frame 20 to which a pair of propulsion axles 10 are mounted. The working machine frame 20 further supports the dump body 30, and thereby carries the load of anything contained in the dump body 30 as well as the weight from the dump body itself. The propulsion axles 10 are equipped with a propulsion hub 14 (not shown in fig. 1) for driving propulsion means 60. In the figures the propulsion means 60 are illustrated as wheels, however, they may also be crawlers.

Further, an electrical engine 70 is installed onto the propulsion axle 10 being coupled to a drive shaft (not shown). The electrical engine 70 is mounted onto a front side of the propulsion axle's 10 elongated main body, said front side facing away from a centre of the working machine 1. The working machine may comprise one electrical engine 70 on each machine axle 10.

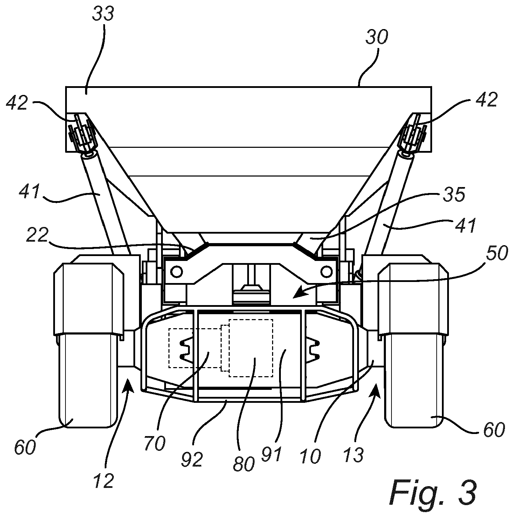

Further, the working machine 1 may comprise a tilting arrangement 40, such as a tilting arrangement comprising one or more tilting actuators 41, such as hydraulic actuators, for tilting the dump body 30 of the working machine 1. The tilting arrangement 40 is in one end attached to the frame 20 and in the other end to the dump body 30. Preferably, the tilting arrangement 40 comprise two tilting actuators 41 arranged at different sides of the dump body to ensure a stable tilting (as shown in fig 3).

Figure 1 finally disclose an electrical control arrangement 75, arranged to the frame of the working machine 1. The electrical control arrangement 75 may comprise (as illustrated in fig 2) a power source 76 e.g. a battery arrangement, for supporting the electrical engine(s) 70 and any other components with power. Further, the electrical control arrangement 75 may comprise a control unit 77 for controlling the working machine. The control unit 77 may be capable of receiving a remote control signal to enable the working machine to be remotely controlled. Such a signal may be received from an external transmission unit (not shown). It may further be capable of communicating any information to or from the working machine from or to a remote server (not shown). Such information may comprise usage data, service information, battery status, load, weight, capacity utilization or any other relevant information.

The load receiving area circumference 34 may form a closed loop that fully encloses a continuously open load receiving area 31. However, some embodiments of the working machine 1 may comprise one or more internal partitioning walls partitioning the open load receiving area 31 into two or more compartments (not shown).

The propulsion axle arrangement 10 also comprises a cover arrangement 90 for covering the electrical engine, wherein the cover arrangement comprises a first (inner) cover 91 and a second cover 92 being arranged on the outside of the first cover.

Turning to fig. 2, being the side view of the same embodiment of the vehicle, the working machine frame 20 is clearly illustrated as being coupled the propulsions means 60, i.e. the wheels, (via the propulsion axle, which is not seen in this view). Further, the illustration shows that the dump body 30 rests on the working machine frame 20. However, in the illustrated embodiment it is not in contact with the frame 20 during its whole length, but rather at the load dumping side 2 at an attachment means 21 being a pivotal arrangement allowing the dump body 30 to pivot relative the frame 20. The dump body 30 further rests on the frame 20 at a guiding plate portion 22, which will be further described in relation to fig 3. Further, the tilting arrangement 40, with one of the side's tilting actuators 41 is clearly sown in fig. 2. The tilting actuator 41 is in one end attached to the frame 20 and in the other end to the dump body 30. Further, the tilting actuator may be extended so that the dump body's opposite end portion 33 is elevated. Preferably, the tilting arrangement 40 comprise two tilting actuators 41 arranged at different sides of the dump body to ensure a stable tilting, and to spread the load on two actuators enabling a lower dimension of the tilting actuators for the same load.

As is also clearly shown in fig. 1 and 2, the working machine 1 extends in at least a longitudinal direction L, a vertical direction V and a transversal direction T. The longitudinal direction L is parallel to an intended direction of travel of the working machine 1. Further the transversal direction T is perpendicular to each one of the vertical direction V and the longitudinal direction L. That is, the transversal direction T is parallel to the general extension of the propulsion axles 10. These directions are intended to be interpreted relative the working machine, and should not be interpreted as being dependent of the vehicle's orientation.

Further, the electrical control arrangement 75 is illustrated in the side view of fig. 2. The placement of the electrical control arrangement 75 should only be considered to be an example. It is preferably arranged between the two working machine axles 10 and coupled to the frame 20, but the exact placement may be chosen in so that it is functionally placed in the environment which the working machine is to be used. Having the electrical control arrangement 75 on the outside of the frame, so that it is accessible from the side of the vehicle gives that advantage that both maintenance is facilitated and that any transceiving unit in the control arrangement, sending and/or receiving information may obtain a better signal and/or range. However, it would be possible to place the electrical control arrangement 75 transversally central on the working machine, i.e. under the dump body 30.

The dump body 30 of the working machine may further be designed so that the working machine 1 can assume a position relative to a second working machine of the same type, in which position the dump bodies at least partly overlap in at least the longitudinal or transversal direction. Generally, overlap of the dump bodies may be obtained on any side of the working machines 1. For instance, the overlap may be obtained along the longitudinal sides or the transversal sides of the working machines 1. For example, the above overlap may be at least 2%, preferably at least 5%, more preferred at least 8% of the load receiving length of the open load receiving area 31 in said longitudinal direction L.

Further, in figure 3 the working machine is shown in a front view, in one embodiment of the invention. In the front view, the working machine 1 is illustrated from one of the transversal sides, and more specifically from the side called the opposite side 3, being the side opposite of the load dumping side 2. The frame 20 is coupled to the propulsion axle 10, via the suspension arrangement 50 allowing the frame 20 to move relative the propulsion axle 10 in the vertical plane. Further, the propulsion axle comprises two opposing end portions 12, 13 each having a propulsion hub (not shown) coupled the propulsions means 60, i.e. the wheels in this embodiment. Further, the dump body 30 rests on the working machine frame 20 at a guiding plate portion 22. The dump body 30 comprise a load supporting end portion 35, which cooperates with a guiding plate portion 22 and works as a guiding means for guiding the dump body towards a transversally centred position during a pivotal downward movement of the dump body relative the frame. The formation of these guiding plate portions and load supporting end portions may be formed with an angle to a horizontal plane, i.e. with a vertical inclination. Further, the tilting arrangement 40 is clearly shown having two tilting actuators 41 arranged on each longitudinal side of the dump body. The tilting actuators 41 are attached to the dump body 30 at its top portion in a rotational coupling 42. Further, the tilting actuator may be extended so that the dump body's opposite end portion 33 is inclined. Finally, fig. 3 illustrates that the propulsion axle is equipped with an electrical engine 70 being drivably coupled to a drive shaft inside the propulsion axle (thus not shown) and mounted onto the illustrated front side 16 of the elongated main body 11, said front side 16 facing away from a centre of the working machine 1 in the transversal direction. This is further illustrated in the subsequent figures. In figures 1-3 the electrical engine 70 and gear box 80 are hidden by the engine cover 90, and is thus only noted with a dashed line in fig 3.

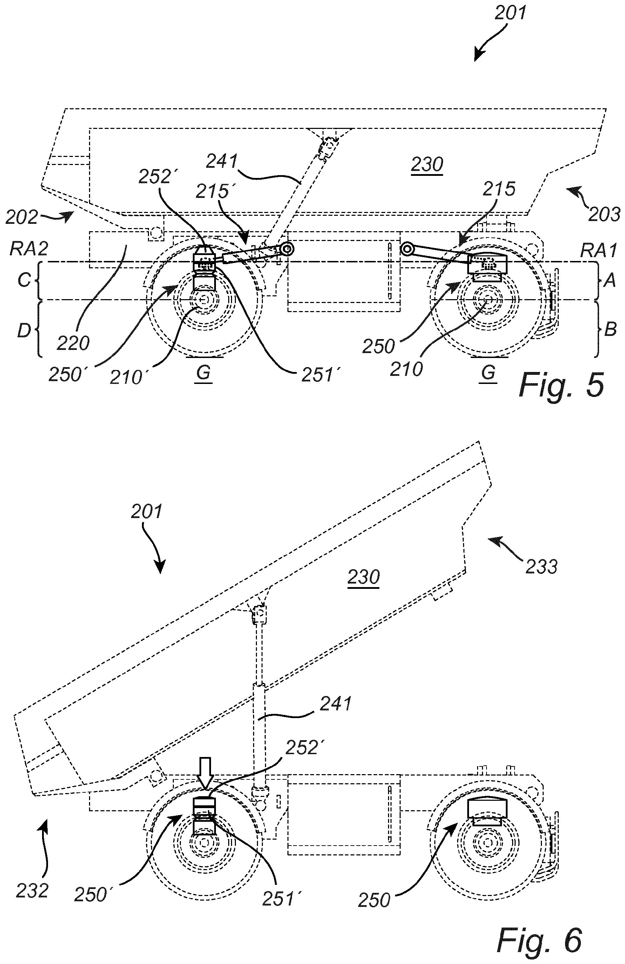

In Fig. 5 and Fig. 6 a working machine 201 according to one embodiment is shown. In Fig. 5 a side view showing the first and second propulsion axle suspension arrangements 250, 250' of the working machine 201 is shown, and in Fig. 6 a side view of the working machine 201 of Fig. 5 in a load dumping sate is shown. The configuration shown in Figs. 5 and 6 is applicable to the working machine 1 shown in Figs. 1-3. Moreover, as the working machine 201 in Figs. 5 and 6 comprises the same or similar features and components as the working machine 1 in Figs. 1-3, similar reference numerals are used for corresponding features, but with the addition of "200".

In Fig. 5, a working machine having a first side 203 and a second side 202 arranged opposite to the first side 203 is shown, the second side 202 being a load dumping side 202. The working machine 201 comprises a dump body 230 for receiving a load, a working machine frame 220 for supporting the dump body 230, and
at least one tilting actuator 241 connecting the working machine frame 220 and the dump body 230 such that, in a load dumping state, the dump body 230 is tiltable by means of the at least one tilting actuator 241 in order to discharge the load from the dump body 230 (as shown in Fig. 6).

The working machine 201 further comprises a first propulsion axle 210 arranged in the first side 203 of the working machine 201, and a second propulsion axle 210' arranged in the second side 202 of the working machine 201. A first propulsion axle suspension arrangement 250 is arranged between the first propulsion axle 210 and the working machine frame 220; and a second propulsion axle 250' suspension arrangement arranged between the second propulsion axle 210' and the working machine frame 220.

As shown in Fig. 5, the second propulsion axle suspension arrangement 250' comprises at least one projection arm 251' extending from the second propulsion axle 210' towards the working machine frame 220, and a suspension cushion 252' arranged between the projection arm 251' and the working machine frame 220. The suspension cushion 252' is configured to suspensionally take up a load, up to a threshold load.

Turning now to Fig. 6 showing the same working machine 201 as in Fig. 5, but in a state where the tilting actuator 241 has tilted the dump body 230 into the load dumping state.

The dump body 230 comprises a first end portion 233 and a second end portion 232 arranged on the opposite side to the first end portion 233, the second end portion 232 being a load dumping end portion 232 which is pivotally arranged to the working machine frame 220 (e.g. by means of an attachment means). The tilting actuator 241 is connected to the dump body 230 in such a way that in the load dumping state, the first end portion 233 of the dump body 230 is lifted.

As clearly shown in Fig. 6, the suspension cushion 252' is configured in such a way that the load from the working machine frame 220 to the second propulsion axle suspension arrangement 250' exceeds the threshold load, when the working machine 201 is in its load dumping state. Thus, in Fig. 6, the load from the working machine frame 220 is taken up mainly by the at least one projection arm 251'. Hereby, the connection between the working machine frame 220 and the second propulsion axle suspension arrangement 250' is made stiff.

Stated differently, the second propulsion axle suspension arrangement 250' has a second propulsion axle damping characteristics, wherein in the load dumping state the second propulsion axle damping characteristics is adapted to make the second propulsion axle suspension arrangement 250' stiff. In other words, in the load dumping state, the second propulsion axle damping characteristics is zero or close to zero.

As also shown in Fig. 6, the first propulsion axle suspension arrangement 250 is different from the second propulsion axle suspension arrangement 250'. Thus, the damping characteristic of the first propulsion axle suspension arrangement is different from the second propulsion axle damping characteristics. Typically, the first propulsion axle suspension arrangement 250 has a greater suspension ability compared to the second propulsion axle suspension arrangement 250'.

Turning back to Fig. 5, the working machine 201 further comprises a first linkarm arrangement 215 pivotably connecting the first propulsion axle 210 with the working machine frame 220 such that the roll axis RA1 of the first propulsion axle 210 relative the working machine frame 220 is comprised in the first linkarm arrangement 215. Correspondingly, the working machine 201 further comprises a second linkarm arrangement 215' pivotably connecting the second propulsion axle 210' with the working machine frame 220 such that the roll axis RA2 of the second propulsion axle 210' relative the working machine frame 220 is comprised in the second linkarm arrangement 215'. As shown in Fig. 5, the first and second linkarm arrangements 215, 215' are positioned above the first and second propulsion axles 210, 210', respectively. Thus, the respective roll axis RA1, RA2 is positioned above the first and second propulsion axles 210, 210', respectively. As also shown in Fig. 5, the two roll axis RA1, RA2 coincides, and the coinciding roll axis is positioned horizontally above the respective upper ends of the first and second propulsion hubs.

Now the position of the respective roll axis RA1, RA2 above the respective first and second propulsion axles 210, 210', will be described in more detail. The position of the roll axis RA1 of the first propulsion axle 210 may be described as follows: a ratio of a first parameter A defined as the shortest distance between the center of the first propulsion axle 210 and the roll axis RA1 of the first propulsion axle 210, and a second parameter B defined as the shortest distance between the center of the first propulsion axle 210 and the ground G is between 0.35 and 1.0, preferably between 0.55 and 0.75, and more preferably between 0.65 and 0.75. That is A/B is between 0.35 and 1.0, preferably between 0.55 and 0.75, and more preferably between 0.65 and 0.75. Defined differently, the shortest distance between the center of the first propulsion axle 210 and the roll axis RA1 of the first propulsion axle 210 (i.e. parameter A) is between 200 mm and 500 mm, preferably between 300 mm and 400 mm.

Correspondingly, the position of the roll axis RA2 of the second propulsion axle 210' may be described as follows: a ratio of a third parameter C defined as the shortest distance between the center of the second propulsion axle 210' and the roll axis RA2 of the second propulsion axle 210', and a fourth parameter D defined as the shortest distance between the center of the second propulsion axle 210' and the ground G is between 0.35 and 1.0, preferably between 0.55 and 0.75, and more preferably between 0.65 and 0.75. That is C/D is between 0.35 and 1.0, preferably between 0.55 and 0.75, and more preferably between 0.65 and 0.75. Defined differently, the shortest distance between the center of the second propulsion axle 210' and the roll axis RA2 of the second propulsion axle 210' (i.e. parameter C) is between 200 mm and 500 mm, preferably between 300 mm and 400 mm.

As only a side view of the working machine 201 is shown in Figs. 5 and 6, only one projection arm 251' and only on suspension cushion 252' etc are shown. However, according to one embodiment, the opposite side of the working machine 201 to what is shown in Figs. 5 and 6, comprises the same, or identical, components as shown in Figs. 5 and 6 (e.g. a respective projection arm, suspension cushion etc.)

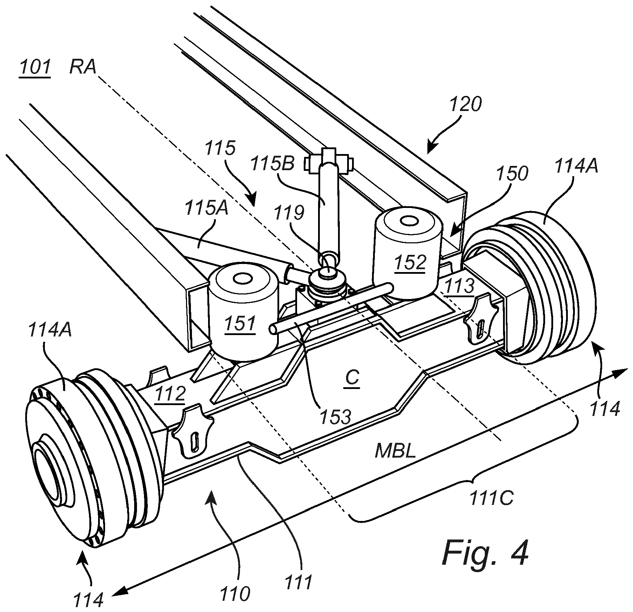

Turning now to Fig. 4 showing a perspective view of a portion of the working machine 1, 201. The configuration shown in Fig. 4 s applicable to the working machine 1 shown in Figs. 1-3, and/or the working machine 201 shown in Figs. 5-6. Thus, corresponding features and components in the working machine 1, 201 of Figs. 1-3 and 5-6 are given similar reference numerals.

In Fig. 4, a working machine frame 120 and one propulsion axle 110 having an elongated main body 111 comprising a first end portion 112, a second end portion 113 and a center portion 111C arranged between said first and second end portions 112, 113, is shown. Each one of the first second end portions 112, 113 is here equipped with a respective propulsion hub 114 for driving a working machine propulsion means such as e.g. a wheel. The elongated main body 111 has a main body length MBL extending from said first end portion 112 to said second end portion 113.

Also shown in Fig. 4 is a propulsion axle suspension arrangement 150 arranged between said working machine frame 120 and said propulsion axle 110. The propulsion axle suspension arrangement 150 of Fig. 4 may for example be used as the first propulsion axle suspension arrangement 250 in Figs. 5 and 6. Note than in Fig. 4, a portion of the working machine frame 120 covering the suspension arrangement 150 from above is removed for clarity reasons. The propulsion axle suspension arrangement 150 comprises a first suspension device 151 and a second suspension device 152 arranged on opposite sides of a center C of the elongated main body 111, each one of said first and second suspension devices 151, 152 is holding a suspension fluid (not shown).

As can be seen in Fig. 4, the first and second suspension devices 151, 152 are arranged in the center portion 111C of the elongated main body 111. In Fig. 4, the center portion is centrally arranged on said elongated main body 111, and is delimited to be closer to, but not higher than, 50 % of the main body length MBL.

As also shown in Fig. 4, the propulsion axle suspension arrangement 150 further comprises a fluid communication path 153 configured to enable suspension fluid communication between said first suspension device 151 and said second suspension device 152. Thus, fluid may be exchanged by the first and second suspension device 151, 152 via said fluid communication path 153. In Fig. 4, the fluid communication path 153 is passively unregulated. In other words, according to such embodiments, there are no vents or valves regulating the flow of fluid through said fluid communication path 153.

Preferably, the propulsion axle suspension arrangement 150 of Fig. 4 is at least partly pneumatically driven. Thus, in such embodiments said first suspension device 151 is a first air bellow 151, and said second suspension device 152 is a second air bellow 152.

In Fig. 4, a linkarm arrangement 115 is pivotably connecting said propulsion axle 110 with said working machine frame 120. The linkarm arrangement 115 comprises two linkarms 115A, 115B, and a propulsion axle connection hub 119, each one of said two linkarms 115A, 115B has a respective propulsion axle end portion connected to the propulsion axle connection hub 119, and a respective frame end portion connected to said working machine frame 120. The two linkarms 115A, 115B is in Fig. 4 forming a V-shaped link. Hereby, the linkarm arrangement prevents the propulsion axle to be pivoted in an undesired direction.

The roll axis RA of the propulsion axle relative the working machine frame is comprised in said linkarm arrangement 115. As the linkarm arrangement 115 is positioned above said center portion 111C of said elongated main body 111, the roll axis RA (and roll center) of the propulsion axle 110 is positioned above said center portion 111C of said elongated main body 111. In Fig. 4, the roll axis RA (and roll center), as well as at least a part of the linkarm arrangement 115, such as the propulsion axle connection hub 119, is centrally positioned between said first and said second suspension devices 151, 152.

The positioned of the roll axis RA above the propulsion axle 110 can be defined differently. For example, the roll axis may be defined as being positioned above the respective upper ends 114A of the first and second propulsion hubs 114.

It is to be understood that the present invention is not limited to the embodiments described above and illustrated in the drawings; rather, the skilled person will recognize that many changes and modifications may be made within the scope of the appended claims.

## Claims

1. A working machine having a first side and a second side arranged opposite to said first side, said second side being a load dumping side, said working machine comprising:
a dump body for receiving a load,
a working machine frame for supporting said dump body,
at least one tilting actuator connecting said working machine frame and said dump body such that, in a load dumping state, said dump body is tiltable by means of said at least one tilting actuator in order to discharge the load from the dump body,
a first propulsion axle arranged in said first side of the working machine, and a second propulsion axle arranged in said second side of the working machine;
a first propulsion axle suspension arrangement arranged between said first propulsion axle and said working machine frame; and a second propulsion axle suspension arrangement arranged between said second propulsion axle and said working machine frame,
**characterized in that**
in said load dumping state said second propulsion axle suspension arrangement is bottoming out and thereby stiff.

2. A working machine according to claim 1, wherein said second propulsion axle suspension arrangement has a second propulsion axle damping characteristics, wherein said second propulsion axle damping characteristics is defined by the ability of the second propulsion axle suspension arrangement to suspensionally take up a load from said second propulsion axle and/or said working machine frame, and wherein in said load dumping state, said second propulsion axle damping characteristics is zero or close to zero.

3. A working machine according to claim 1, wherein said first propulsion axle suspension arrangement has a first propulsion axle damping characteristics which is different from said second propulsion axle damping characteristics.

4. A working machine according to any one of the preceding claims, wherein said first propulsion axle suspension arrangement has a larger suspension ability compared to said second propulsion axle suspension arrangement.

5. A working machine according to any one of the preceding claims, wherein said dump body comprises a first end portion and a second end portion arranged on the opposite side to said first end portion, said second end portion being a load dumping end portion which is pivotally arranged to said working machine frame, wherein said tilting actuator is connected to said dump body in such a way that in said load dumping state, said first end portion of the dump body is lifted.

6. A working machine according to any one of the preceding claims, wherein said second propulsion axle suspension arrangement comprises at least one projection arm extending from said second propulsion axle towards said working machine frame, and a suspension cushion arranged between said projection arm and said working machine frame, wherein said suspension cushion is configured to suspensionally take up a threshold load.

7. A working machine according to claim 6, wherein in said load dumping state, said suspension cushion is configured in such a way that a load from said working machine frame to said second propulsion axle suspension arrangement exceeds the threshold load, whereby said load from said working machine frame is taken up mainly by said at least one projection arm.

8. A working machine according to any one of the preceding claims, wherein said first propulsion axle has an elongated main body comprising a first end portion, a second end portion and a center portion arranged between said first and second end portions, each one of said first and said second end portions being adapted to be equipped with a propulsion hub for driving a working machine propulsion means, said elongated main body having a main body length extending from said first end portion to said second end portion, and
wherein said first propulsion axle suspension arrangement comprises a first suspension device and a second suspension device arranged on opposite sides of the center of the elongated main body,
and wherien said first and second suspension devices are arranged in the center portion of the elongated main body.

9. A working machine according to claim 8, wherein said center portion is centrally arranged on said elongated main body, and is delimited to be at most 50 % of the main body length.

10. A working machine according to claim 8, wherein said first suspension device is arranged closer to the center of the elongated main body than to the first end portion of the elongated body, and said second suspension device is arranged closer to the center of the elongated main body than to the second end portion of the elongated body.

11. A working machine according to any one of the preceding claims, wherein the roll axis of the said first propulsion axle is centrally positioned between said first and said second suspension devices.

12. A working machine according to any one of the preceding claims, further comprising
a first linkarm arrangement pivotably connecting said first propulsion axle with said working machine frame such that the roll axis of the first propulsion axle relative the working machine frame is comprised in said first linkarm arrangement,
a second linkarm arrangement pivotably connecting said second propulsion axle with said working machine frame such that the roll axis of the second propulsion axle relative the working machine frame is comprised in said second linkarm arrangement,
wherein at least the respective portion of the first and second linkarm arrangement comprising the respective roll axis is positioned above the respective center portion of said first and second propulsion axle.

13. A working machine according to claim 12, wherein the ratio of a first parameter A defined as the shortest distance between the center of the first propulsion axle and the roll axis of the first propulsion axle, and a second parameter B defined as the shortest distance between the center of the first propulsion axle and the ground is between 0.35 and 1.0, preferably between 0.55 and 0.75, and more preferably between 0.65 and 0.75, and/or wherein the ratio of a third parameter C defined as the shortest distance between the center of the second propulsion axle and the roll axis of the second propulsion axle, and a fourth parameter D defined as the shortest distance between the center of the second propulsion axle and the ground is between 0.35 and 1.0, preferably between 0.55 and 0.75, and more preferably between 0.65 and 0.75.

14. A working machine according to any one of claims 12-13, wherein the shortest distance between the center of the first propulsion axle and the roll axis of the first propulsion axle is between 200 mm and 500 mm, preferably between 300 mm and 400 mm, and/or wherein the shortest distance between the center of the second propulsion axle and the roll axis of the second propulsion axle is between 200 mm and 500 mm, preferably between 300 mm and 400 mm.

15. A working machine according to any one of claims 12-15, further comprising said first and second propulsion hubs for driving a working machine propulsion means, and wherein the roll axis for said first propulsion axle coincides with the roll axis for said second propulsion axle, and wherein the coinciding roll axis is positioned horizontally above the respective upper ends of the first and second propulsion hubs.
